Europäisches Patentamt

European Patent Office

Office européen des brevets

(11) Veröffentlichungsnummer: **0 599 841 B1**

## (12) EUROPÄISCHE PATENTSCHRIFT

(45) Veröffentlichungstag der Patentschrift: **31.05.95**

(51) Int. Cl.6: **B65G 63/04**

(21) Anmeldenummer: **92903404.9**

(22) Anmeldetag: **21.01.92**

(86) Internationale Anmeldenummer:
**PCT/AT92/00005**

(87) Internationale Veröffentlichungsnummer:
**WO 93/04962 (18.03.93 93/08)**

(54) **VERFAHREN UND VORRICHTUNG ZUM UMSCHLAGEN VON CONTAINERN.**

(30) Priorität: **28.08.91 AT 1692/91**

(43) Veröffentlichungstag der Anmeldung:
**08.06.94 Patentblatt 94/23**

(45) Bekanntmachung des Hinweises auf die
Patenterteilung:
**31.05.95 Patentblatt 95/22**

(84) Benannte Vertragsstaaten:
**AT BE CH DE FR IT LI NL**

(56) Entgegenhaltungen:
**DD-A- 88 011**
**DE-B- 2 440 682**
**GB-A- 1 214 618**
**GB-A- 1 233 827**
**US-A- 4 522 546**

(73) Patentinhaber: **JESCHEK, Klaus, Dipl.-Ing.**
**Salzamtgasse 2**
**A-8010 Graz (AT)**

Patentinhaber: **KÖCK, Wolfgang, Dipl.-Ing.**
**Salzamtgasse 2**

**A-8010 Graz (AT)**

Patentinhaber: **LIXL, Armin, Dipl.-Ing.**
**Salzamtgasse 2**
**A-8010 Graz (AT)**

Patentinhaber: **POSCH, Karl-Heinz, Dipl.-Ing.**
**Salzamtgasse 2**
**A-8010 Graz (AT)**

Patentinhaber: **SEE, Franz Josef, Dipl.-Ing.**
**Salzamtgasse 2**
**A-8010 Graz (AT)**

(72) Erfinder: **JESCHEK, Klaus, Dipl.-Ing.**
**Salzamtgasse 2**
**A-8010 Graz (AT)**
Erfinder: **KÖCK, Wolfgang, Dipl.-Ing.**
**Salzamtgasse 2**
**A-8010 Graz (AT)**
Erfinder: **LIXL, Armin, Dipl.-Ing.**
**Salzamtgasse 2**
**A-8010 Graz (AT)**

EP 0 599 841 B1

Erfinder: **POSCH, Karl-Heinz, Dipl.-Ing.**
**Salzamtgasse 2**
**A-8010 Graz (AT)**
Erfinder: **SEE, Franz Josef, Dipl.-Ing.**
**Salzamtgasse 2**
**A-8010 Graz (AT)**


74) Vertreter: **Kliment, Peter, Dipl.-Ing. Mag.-jur.**
**Singerstrasse 8/3/8**
**A-1010 Wien (AT)**

**Beschreibung**

Die Erfindung betrifft ein Verfahren zum Umschlagen von Containern oder Wechselaufbauten von LKWs oder Schiffen auf Eisenbahnzüge, bestehend aus folgenden Schritten:

- Übernahme der Container oder Wechselaufbauten aus einem Zwischenlager, einem LKW, einem Zug oder einem Schiff;
- Übergabe der umzuladenden Container oder Wechselaufbauten auf ein Fördermedium;
- Bereitstellung zumindest eines Teiles der Container oder Wechselaufbauten auf dem Fördermedium, wobei die Container (20) oder Wechselaufbauten vor der Einfahrt des Zuges vorpositioniert werden und unmittelbar neben die jeweils zur Beledung vorgesehenen Eisenbahnwaggons herangeführt werden.
- Beladung des Zuges mit den Containern oder Wechselaufbauten;

Als Container im Sinns der Erfindung werden neben den bekannten, in Größe und Griffweise normierten Behältern auch Wechselaufbauten verstanden, die für den kombinierten Bahn-, Schiffs- und Straßentransport eingesetzt werden. Solche Wechselaufbauten sind oft nach oben hin durch eine Plane verschlossen und im Gegensatz zu Containern nicht übereinander stapelbar. Weiters sind auch Kleincontainer darunter zu verstehen, sowie Platten zum Transport von Stückgut aller Art, sofern sie die für Wechselaufbauten geltenden Normen für das Handling erfüllen.

Unmittelbar neben den Eisenbahnwaggon kann bedeuten, daß der Container auf gleicher Höhe mit dem Eisenbahnwaggon angeordnet ist oder um eine Containerlänge versetzt ist, um die Manipulation zu ermöglichen.

Aus der DE-A 34 21 418 ist ein Containerterminal bekannt, das ein Hochregallager besitzt. Zwischen diesem Hochregallager und den einzelnen Umschlagplätzen sind Schnellfahrtmagistralen angeordnet, auf denen die Container auf selbstfahrenden Wagen transportiert werden. An den Umschlagplätzen werden die Container in bekannter Art auf Schiffe oder Eisenbahnzüge verladen.

Es sind weiters Containerumschlagplätze bekannt, bei denen der Belade- und Entladevorgang folgendermaßen abläuft: Der auf einem LKW herangebrachte Container wird von einem Kran erfaßt und auf ein Zwischenlager transportiert. Dieses besteht im allgemeinen aus übereinander gestapelten Containern. Weiters ist im Bereich der Verladestation ein Eisenbahngleis vorgesehen. Ein darauf befindlicher Zug wird mit den Containern beladen, indem ein Kran die Container aus dem Zwischenlager nacheinander auf die einzelnen Waggons stellt. Der Beladevorgang dauert auf diese Weise sehr lange, da im allgemeinen nur ein einziger Kran, der als Brückenkran ausgebildet ist, zur Beladung verwendet werden kann. Dieser Kran muß zunächst den umzuladenden Container aus dem Zwischenlager lösen, wozu unter Umständen mehrere Manipulationen notwendig sind, falls der gewünschte Container unter einem oder mehreren anderen Containern angeordnet ist. Nach dem Erfassen dieses Containers muß der Kran eine unter Umständen lange Wegstrecke bis zu dem jeweiligen Waggon zurücklegen. Man muß daher die für die Abfertigung eines Zuges benötigte Zeit mindestens einigen Tagen ansetzen. Dies verlangsamt nicht nur den Umlauf der in dem Container beförderten Waren, sondern führt auch zu beträchtlichen Containerlagern mit einem enormen Platzbedarf. Ein weiterer Nachteil besteht darin, daß am Verladegleis keine Oberleitung vorhanden sein darf, um den Beladevorgang für die Eisenbahnwaggons, der von oben her erfolgt, nicht zu behindern. Für das Rangieren müssen daher Diesellokomotiven eingesetzt werden, was eine weitere Komplikation im Betrieb bedeutet.

Weiters ist aus der US-A 4,027,823 eine Vorrichtung zum Beladen von Lastkraftwagen bekannt. Dabei wird eine Reihe von Paletten vorbereitet und in einem einzigen Beladevorgang auf den LKW verladen. Für die Beladung eines Eisbahnzuges mit einer Vielzahl von Waggons ist dieses Prinzip nicht anwendbar.

Weiters wurde durch die US-A-4 522 546 eine Bahnstation vorgeschlagen, bei der zu beiden Seiten eines jeden Hauptgleises Gleise für eine Transfereinrichtung angeordnet sind, auf denen selbstfahrende Transferwagen verfahrbar sind. Diese Transferwagen sind mit mehreren Gruppen von seitlich ausfahrbaren Ablegebalken versehen, mit denen Container von einem seitlich stehenden LKW, einem Eisenbahnwaggon oder einem Transferwagen übernommen werden und auf einen anderen seitlich stehenden LKW, Eisenbahnwaggon oder Transferwagen aufgeladen werden können.

Dieser Aufbau einer Bahnstation ist im wesentlichen darauf konzipiert, daß Container von einem Zug auf einen anderen Zug umgeladen werden und dadurch ein umständliches und zeitaufwendiges Rangieren zum Zerlegen und neu Zusammenstellen von Guterzügen unterbleiben kann. Bei dieser Konzeption ist ein Anschluß an andere Verkehrsträger schwierig (LKW) oder nicht vorgesehen (Schiff). Heute genormte Eisenbahnwaggons und LKWs können von diesem System nicht bedient werden, da diese keinen Platz für das Ein- und Ausfahren der Ablegebalken der Transferwagen aufweisen. Die Ablegebalken unterstützen die Container quer zur Containerlängsrichtung, daher können nur Container im engeren Sinne, nicht aber Tankcontainer und Wechselaufbauten manipuliert werde. Die Transferwagen sind sehr kompliziert aufgebaut, da sie mittels ausfahrbaren, auskragenden, aufheb- und absenkbaren Ablegebalken die Container greifen und über Zuggleise hinweg an andere Transferwagen übergeben. Zusätzlich müssen die Tranferwagon verschieden spezielle Einrichtungen aufweisen, um die nie ganz parallel stehenden LKWs be- und entladen zu können, um eine koordinierte Übergabe zwischen zwei Transferwagen zu ermöglichen und um bei der Ladetätigkeit ein Umkippen zu verhindern. Für jeden einzelnen Container ist ein solcher teurer Transferwagen erforderlich, da ein Abstellen der Container auf ortsfesten Einrichtungen nicht vorgesehen ist. außerdem ist ein hoher Flächenbedarf gegeben, da neben jedem Hauptgleis zwei Gleise für die Transferwagen vorgesehen werden müssen und diese Gleise zur Erzielung einer ausreichenden Standfestigkeit der Tranferwagen eine große Spurweite aufweisen müssen.

Weiters wurde durch die DD-A-88 011 ein Verfahren bekannt, bei dem die Container vom Waggon mittels eines Portalkranes abgenommen und auf einen parallel zum Gleis verlaufenden Rollenförderer gestellt werden. Dieser bringt die Container zu einem weiteren Portalkran, der die Container in ein Lager oder auf LKWs lädt. Für dieses Verfahren ist jedoch ein sehr erheblicher Aufwand an verschiedenen Einrichtungen erforderlich und es ist für den Zug nicht möglich, mit Oberleitung in die Verladestation einzufahren. Außerdem lassen sich mit solchen Einrichtungen Wechselaufbauten nicht handhaben, sondern nur die wesentlich stabileren Container im engeren Sinne.

Aufgabe der Erfindung ist es, diese Nachteile zu vermeiden und ein solches Verfahren so weiterzubilden, daß er Umschlag mit minimalen Mitteln in schnellstmöglicher Zeit durchgeführt werden kann, auch wenn Wechselaufbauten umgeschlagen werden müssen.

Erfindungsgemäß ist vorgesehen, daß die Container oder Wechselaufbauten während ihres Transportes am Fördermedium in einem Teilbereich ihres Bodens flächig unterstützt werden, wogegen sie im zur Vorpositionierung auf ortsfesten Abstelleinrichtunge abgestellten Zustand in einem anderen Teilbereich unterstützt werden.

Das erfindungsgemäße Verfahren ermöglicht somit den Schnellumschlag auch von Wechselaufbauten in Terminalanlagen zwischen Zug, LKW und Schiff, da eben die Container im engeren Sinn und Wechselaufbauten stets an ihrer Bodenfläche abgestützt werden. Dadurch sind keine besonderen Angriffspunkte an den Containern erforderlich und es müssen solche auch nicht gesucht, werden, wie dies z.B. bei Verwendung von Kränen der Fall wäre, deren Lasthaken über Seile mit dem zu handhabenden Containern verbunden werden müssen. Dadurch ist ein rasches Greifen und Abstelllen sowohl von Containern als auch von Wechselaufbauten möglich, und ein rasches und effizientes Zusammenwirken zwischen verschiedenen Verladeeinrichtungen für LKW, Zug und Schiff und dem Fördermedium sichergestellt.

Der Transport in der Anlage wird mit einem vorzugsweise die ganze Anlage durchziehenden Fördermedium bewerkstelligt. Die Vorgänge werden durch eine räumliche und zeitliche Schaltung koordiniert. Darüber hinaus ist es sinnvoll, Anlagen die nach diesem Verfahren arbeiten, so untereinander zu vernetzen, daß Informationen zum Transportablauf von einer Anlage zur nächsten weitergeleitet werden. Dadurch können in den Anlagen vorbereitende Arbeiten getätigt werden, die die Abfertigungszeiten, besonders der Züge, wesentlich verkürzen. Durch die kurzen Abfertigungszeiten eignen sich Anlagen dieser Art besonders für den Verkehr mit rangierfreien Ganzzügen.

Zusätzlich zum Zwischenlager oder an Stelle eines Zwischenlagers kann auch ein Containerschiff treten, falls der Containerterminal eine Anbindung an eine Wasserstraße-besitzt. Auch hier ergibt sich der Vorteil, daß die vom Schiff abgeladenen Container vorpositioniert werden, was die Verweilzeit der Züge minimiert.

Im Sinne einer Maximierung des Gesamtdurchsatzes durch das System kann es vorteilhaft sein, daß nicht alle Container vorpositioniert werden. Denn es ist möglich während der Beladung des Zuges mit den vorpositionierten Containern noch weitere Container aus dem Zwischenlager oder von einem Schiff oder von anderen Stellen des Terminals heranzutransportieren. Die Dauer der Beladung des Zuges wird nicht verlängert, wenn die Anzahl der nicht vorpositionierten Container so gering ist, daß die für ihren Transport benötigte Zeitspanne geringer ist als die Dauer der Beladung des Zuges mit den übrigen, bereits vorpositionierten Containern.

Dabei kann nach einem weiteren Merkmal der Erfindung vorgesehen sein, daß das Vorpositionieren durch Aufstellen der Container oder Wechselaufbauten unmittelbar neben dem Verladegleis und parallel zu diesem erfolgt. Dadurch genügt eine entsprechende seitliche Verschiebung, um die Container auf den entsprechenden Waggon zu laden.

Weiters betrifft die Erfindung eine Vorrichtung zum Umschlagen von Containern, bestehend aus:
- mindestens einem Verladegleis (2b) für einen Eisenbahnzug (22);
- mindestens einem Fördermedium, das zumindest teilweise parallel zu diesem Verladegleis angeordnet ist;
- Einrichtungen zur Manipulation der Container zwischen Fördermedium und dem Eisenbahnzug bzw. den LKWs.

Dabei ist vorgesehen, daß das Fördermedium Mittel zur flächigen Unterstützung der Container aufweist, die die Container während ihres Transportes im Mittelbereich ihres Bodens unterstützen und die die unteren Längskanten der Container oder Wechselaufbauten zum Abstellen freilassen.

Auf diese Weise kann die Übergabe der Container zwischen den einzelnen Komponenten der Vorrichtung schnell und automatisiert durchgeführt werden.

Alternativ dazu kann vorgesehen sein, daß das Fördermedium die Container während ihres Transportes an ihren unteren Längskanten unterstützt und den Mittelbereich ihres Bodens zum Abstellen freigibt. Dies bewährt sich besonders bei der Ausbildung des Transportmediums als Hängebahn.

Durch die Vorpositionierung der Container am Fördermedium ist nur eine geringfügige Querbewegung der Container zur Verladung auf den Eisenbahnwagen notwendig. Dazu ist kein Portalkran erforderlich, sondern es genügt ein Kran mit einem in waagrechter Richtung teleskopartig ausfahrbarem Ausleger. Durch die auf diese Weise mögliche Beladung von der Seite her kann das Verladegleis mit einer Oberleitung ausgestattet sein, was den Verschub wesentlich vereinfacht, da es nicht erforderlich ist Dieselrangierloks an den Zug anzukoppeln..

Eine besonders hohe Kapazität wird erreicht, wenn ein Zwischenlager mit wahlfreiem Zugriff vorgesehen ist. Dies bedeutet, daß jeder im Zwischenlager befindliche Container ohne Umladevorgänge aus diesem entfernt werden kann.

Eine besondere Vereinfachung der Vorrichtung wird erreicht, wenn das Zwischenlager als Regalsystem ausgebildet ist, wobei das Fördermedium die einzelnen Regalpositionen direkt bedient. Dabei kann in weiterer Folge das Fördermedium so ausgebildet sein, daß alle Transportvorgänge innerhalb der Vorrichtung damit durchführbar sind. Insbesonders günstig ist dies in Kombination mit dem Merkmal, daß das Fordermedium als System von Schienen mit darauf beweglich angeordneten Transportwägelchen ausgebildet ist. Dabei können entweder die Transportwägelchen samt den darauf befindlichen Containern über entsprechende Aufzüge in die entsprechenden Abschnitte des Zwischenlagers gehoben werden oder die Aufzüge transportieren nur die Container und setzen diese wider auf gleichartige Wägelchen ab. In beiden Fällen kann davon gesprochen werden, daß das Fördermedium alle Funktionen bedient.

Die Einrichtungen zur Manipulation der Container zwischen Zwischenlager und Fördermedium können jedoch auch in bekannter Weise etwa als Portalkräne ausgebildet sein.

Eine erhebliche Einsparung an Transportwägelchen ist dadurch erreichbar, daß in dem unmittelbar neben dem Verladegleis angeordneten Abschnitt des Fördermediums und im Zwischenlager zu beiden Seiten der Schienen der Transportwägelchen Abstellsockel für die Container oder Wechselaufbauten vorgesehen sind und die Stellflächen der Transportwägelchen zur Unterstützung der Container oder Wechselaufbauten unter die durch die Oberseiten der Abstellsockel bestimmten Ebene absenkbar sind.

Weitere Ausführungsvarianten der Erfindung sind gegeben, wenn das Fördermedium als Förderband oder Rollenband ausgebildet ist.

Besonders günstig ist es, wenn eine LKW-Verladestelle vorgesehen ist, die neben dem Fördermedium angeordnet ist und die eine Hebevorrichtung umfaßt, die sowohl vom LKW als auch von den am Fördermedium transportierten Containern in Längsrichtung durchfahren werden kann und daß weiters eine Steuereinrichtung vorgesehen ist, in der die genaue Position des von einem LKW abzuladenden Containers gespeichert werden kann, um einen auf dem selben LKW aufzuladenden Container mit Hilfe der Steuereinrichtung an exakt die gleiche Position zu bringen. Es ist nämlich relativ einfach, einen auf einem LKW, einem Förderband oder einem Rollwägelchen befindlichen Container mit einem Spreader zu ergreifen. Moderne Spreader besitzen automatische Suchvorrichtungen, die die Feinpositionierung selbsttätig durchführen. Es ist jedoch erheblich aufwendiger einen Container auf einen LKW zu verladen, da hier die Position händisch exakt angesteuert werden muß. Es kann die Gesamtumschlagsdauer eines Containerwechsels erheblich verkürzt werden, wenn die Information über die genaue Lage des abzuladenden Containers für die Positionierung des aufzuladenden Container verwendet wird. Es ist klar, daß der LKW während des Vorganges nicht bewegt werden darf.

Im folgenden wird die Erfindung anhand der in den Figuren dargestellten Ausführungsbeispielen näher erläutert.

Die Figuren zigen:
- Die Fig. 1 einen teilweisen Grundriß der erfindungsgemäßen Vorrichtung auf dem Niveau der LKW-Verladung mit den möglichen angeschlossenen Funktionsbereichen;
- die Fig. 2 einen Grundriß auf dem darunterliegenden Niveau der Bahnverladung;
- die Fig. 3 bis 10 schematisch Möglichkeiten des Transports und des Abstellens von Containern;
- die Fig. 11 und 12 die LKW-Verladung;
- die Fig. 13 bis 16 Möglichkeiten der Bahnverladung;
- die Fig. 17 einen Schnitt durch eine Ausführungsvariante der Erfindung;
- die Fig. 18 einen Schnitt gemäß Linie XVIII-XVIII in Fig. 1;

- die Fig. 19 eine Ausführungsvariante in einem Schnitt analog zu Fig. 18;
- die Fig. 20 und 21 Schnitte durch eine Achse eines Förderwagens während Geradeausfahrt bzw. Kurvenfahrt;
- die Fig 22 den Grundriß einer Kurve des Fördermediums.

Die Container 20 werden von einem Fördermedium 1 transportiert, das alle Funktionsbereiche einer Anlage, die nach dem vorliegenden Verfahren arbeitet, verbindet und bedient.

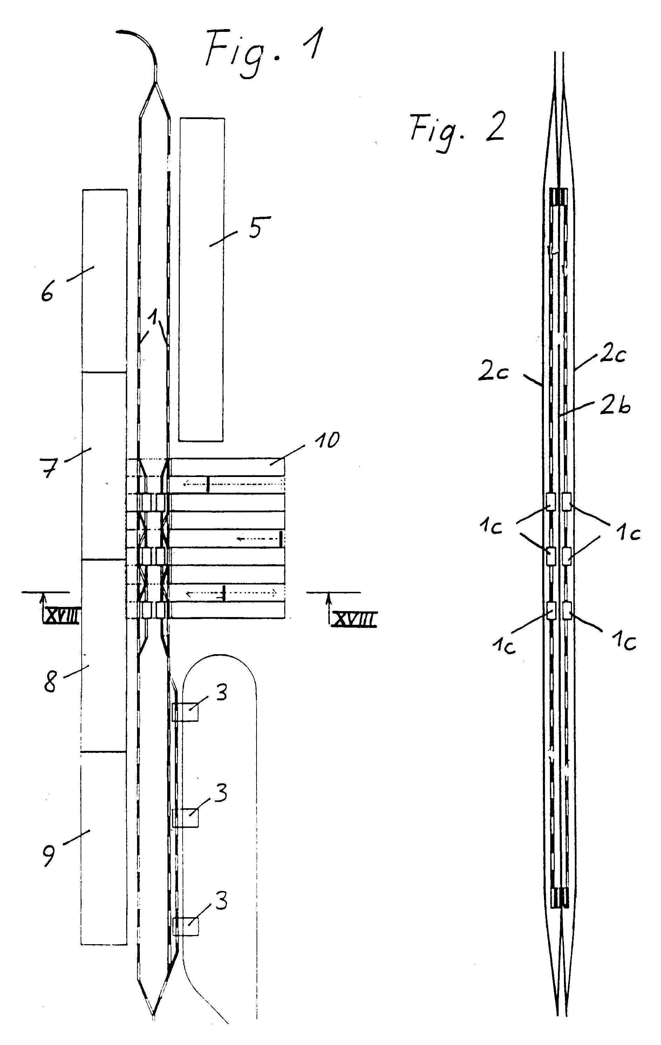

Diese Funktionsbereiche sind die Umschlagsbereiche 2 für Zug 22, 3 für LKW 33 und 4 für Schiff, und andere Funktionsbereiche, die sinnvollerweise an eine solche Anlage angegliedert werden, wie z.B. Zwischenlager 10, Stückgutbereich 5, Leercontainerpool 6, Langzeitcontainerlager 7, Werkstätte 8, Zoll 9 etc. (siehe Fig. 1 und 2).

Hierbei ist es so, daß das Fördermedium 1 Umschlagbereich 2 des Zuges 22 als Vorpositionierungssystem ausgebildet ist, und sich an einer oder an beiden Seiten unmittelbar neben dem (den) Ladegleis(en) 2b befindet(n). Dieser Teil des Fördermediums 1 wird von den Schaltstellen 2c des Fördermediums 1 von oben oder von unten bedient.

Teile des Fördermediums 1 können als Förderband, Rollenband oder Hängebahn ausgebildet sein.

Eine besonders hohe Leistungsfähigkeit des Fördermediums 1 wird erreicht, wenn die Funktion des Containertragens bzw. -transportes von Wagen 1a übernommen wird, die von einer rechnerunterstützten Zentrale gesteuert werden. Diese Wagen 1a sind schienengebunden und in ihrer horizontalen Längsrichtung selbstfahrend. Horizontale Querbewegungen und Vertikalbewegungen der beladenen oder unbeladenen Wagen werden von eigenen Vorrichtungen übernommen.

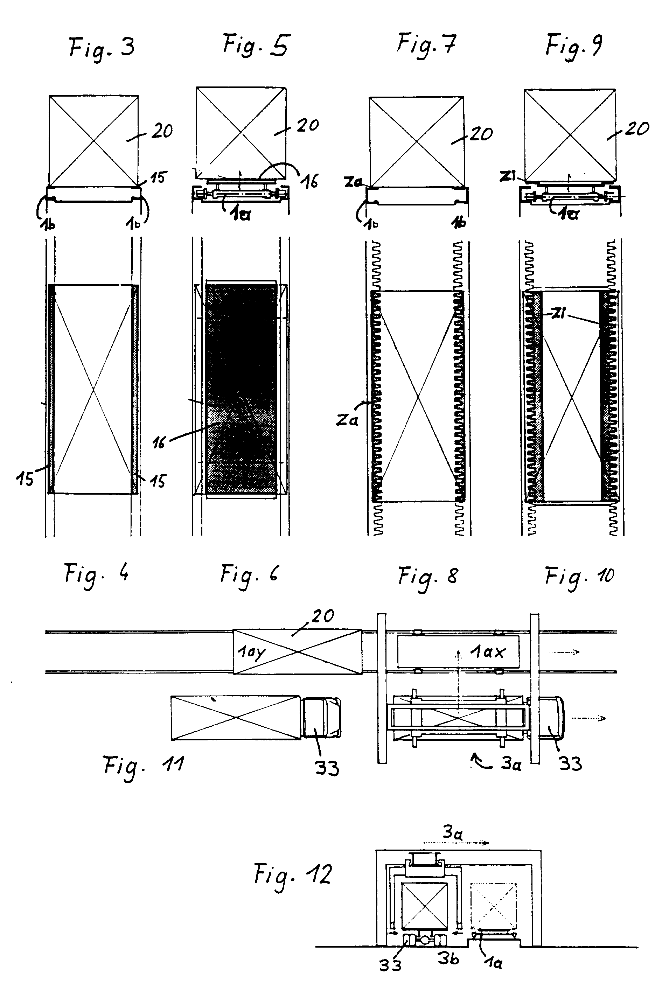

Die Container 20 werden von dem Fördermedium 1 transportiert und abgestellt. Dafür wurden zwei Arten des Handlings entwickelt. Das erste Handling besteht aus dem Umgriff zwischen zwei Möglichkeiten, Container 20 zu tragen:
- Die lineare Unterstützung des Containers 20 entlang seiner unteren Längskanten 15 (Aufriß Fig. 3, Grundriß Fig. 4)
- Die flächige Unterstützung des Containers 20 im Mittelbereich 16 des Behälterbodens (Aufriß Fig. 5, Grundriß Fig. 6)

Däbei kommt für den Transport der Container 20 mittels Wagen die flächige Unterstützung im Mittelbereich 16 zum Einsatz, für die abgesetzten Container 20 wird die lineare Unterstützung an den Längskanten 15 verwendet (siehe Fig. 3, 4, 5, 6). Beim Transport mittels Hängebähnen ist es umgekehrt.

Die zweite Art des Handlings besteht ebenfalls aus dem Umgriff zwischen zwei Möglichkeiten. Container 20 zu tragen.
- Die lineare Unterstützung des Containers 20 entlang seiner unteren Längskanten mit den äußeren Zahnschienen Za (Aufriß Fig. 7, Grundriß Fig. 8),
- Die lineare Unterstützung des Containers 20 entlang seiner unteren Längskanten mit den inneren Zahnschienen Zi (Aufriß Fig. 9, Grundriß Fig. 10).

Dabei kommt für den Transport der Container 20 mittels Förderwagen 1a die innere Zahnschiene Zi zum Einsatz, für die abgesetzten Container 20 werden die äußeren Zahnschienen Za verwendet (siehe Fig. 8, 9, 10, 11). Beim Transport mittels Hängebahnen ist es umgekehrt. Die Zahnschienen greifen so ineinander, daß sowohl die Zähne der Außenschien Za als auch der Innenschiene Zi eine Unterstützung der unteren Längskanten des Containers 20 gewährleisten.

Die Container 20 werden mittels Förderwagen 1a an definierte Positionen am Fördermedium 1, das sich im Zugumschlagsbereich parallel zum und unmittelbar neben dem Ladegleis 2b befindet, herangeführt. Dort werden die Container 20 auf einem Abstellsockel 1b abgesetzt, der ebenso Teil des Fördermediums 1 ist.

Dazu ist es vorteilhaft, daß die genauen Positionen der aussteigenden Container 20 sowie die Leerstellen am Zug 22 vom letztbefahrenen Terminal an den nächstanzufahrenden weitergegeben werden. Sobald diese Information eintrifft, kann mit der Vorpositionierung der Container 20 begonnen werden. Am günstigsten ist es, wenn dieser Vorgang abgeschlossen ist, bevor der Zug 22 in den Terminal einfährt. Besonders leistungsfähig geschieht das Vorpositionieren, wenn der Förderwagen 1a mit einem Handling, wie oben beschrieben, ausgestattet ist. In diesem Fall verläuft das Positionieren wie folgt:
- Ein beladener Förderwagen 1a fährt zu der am Fördermedium 1 für ihn definierten Position, bleibt dort stehen und senkt den Container 20 auf den Abstellsockel 1b ab.
- Der nun unbeladene Wagen 1a fährt unter dem abgestellten Container 20 heraus.

Es kann vorgesehen sein, daß die Räder des Förderwagens 1a des Fördermediums 1 mit Spurkranz S ausgeführt sind.

Eine besonders enge Kurvenfahrt der Wagen 1a ist möglich, wenn die äußeren Räder 30 bei der Fahrt in den Kurven auf diesem Spurkranz S fahren, die inneren Räder 31 aber auf der regulären, für den Geradeauslauf ausgebildeten, Lauffläche A fahren. Der längere Weg, den die äußeren Räder 30 in der Kurve zurückzulegen haben, wird auf diese Art mit gleich vielen Umdrehungen der äußeren Räder 30 zurückgelegt, wie die inneren Räder 31 für die kürzere Wegstrecke brauchen. So können die Räder 30, 31 mit starrer Achse 32 verbunden sein, ohne daß der sonst für starrachsige Schienenfahrzeuge in der Kurvenfahrt auftretende Effekt des Schlupfs auftritt. Auf diese Weise wird auch ein weiterer, für starrachsige Schienenfahrzeuge charakteristischer Effekt, nämlich die Tendenz zum Geradeauslauf, unterbunden. Die Wagen 1a des Fördermediums 1 lenken selbst in die Kurve ein. Durch das Wegfallen des Schlupfs, der einerseits die Schienen, andererseits aber auch die Räder in der Kurve stark abnützt, können die Kurven wesentlich enger geführt werden.

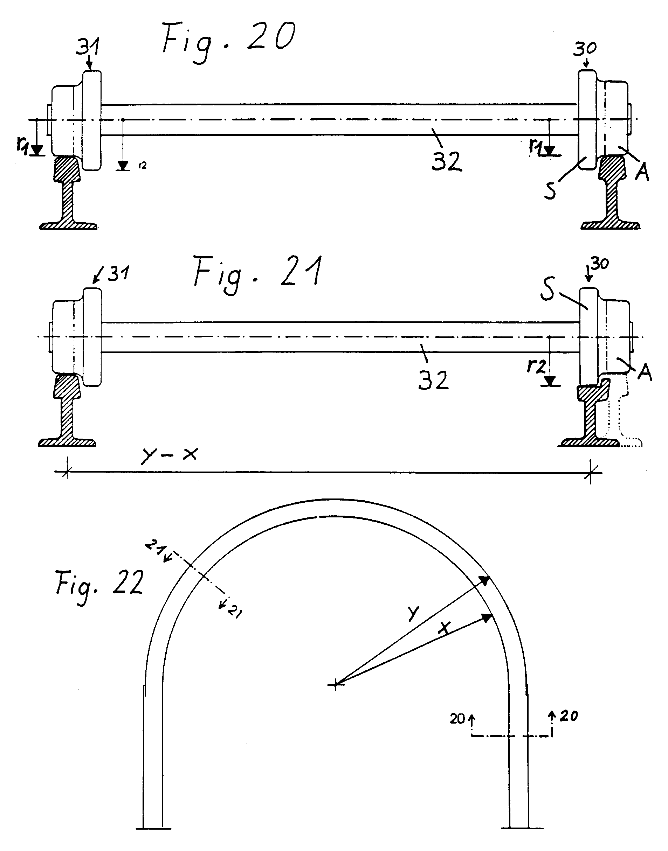

Dabei ist es wesentlich, daß das Verhältnis von Spurkranzradius r2 zur Radius der regulären Laufflächen r1 gleich dem Verhältnis von äußerem Schienenradius y zu innerem Schienenradius x ist (r1:r2 = x:y) (siehe Fig. 20, 21, 22). Das heißt, daß alle engen Kurven, die der Wagen 1a des Fördermediums 1 fährt, den gleichen Radius aufweisen sollen. Kurven mit erheblich weiterem Radius kann der Wagen 1a des Fördermediums 1 in herkömmlicher Weise auf der regulären Auflagerfläche A fahren.

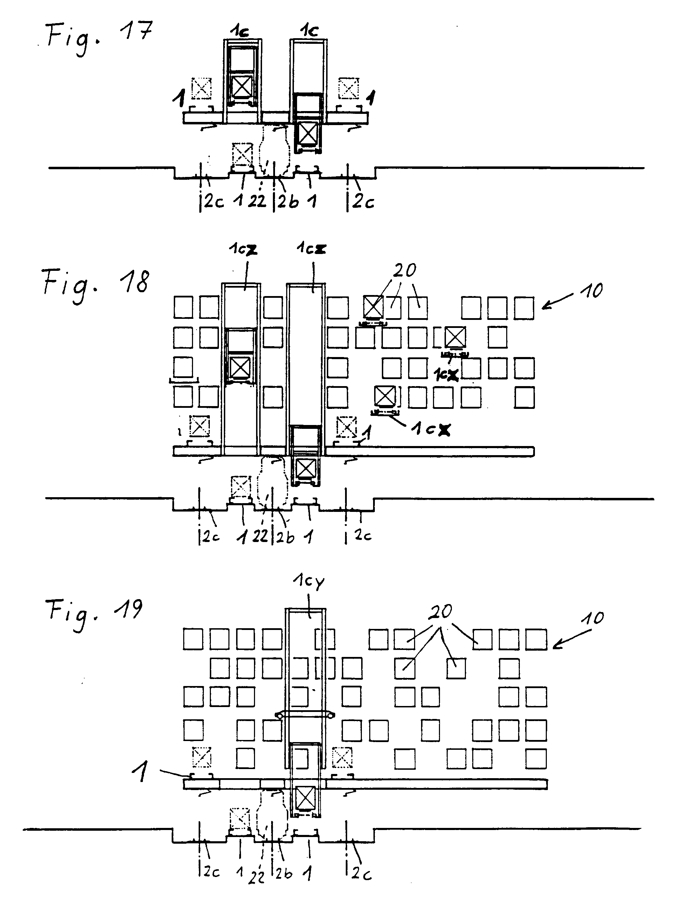

Eine Einrichtung als Schaltstelle 1c des Fördermediums 1 koordiniert den Transport der Container 20 zwischen den einzelnen Funktionsbereichen, in richtiger Reihenfolge und zur richtigen Zeit. (Fig. 17, 18, 19)

Diese Einrichtung bildet im wesentlichen die vertikale Verbindung zwischen dem Bereich des Zugumschlags und einer (oder mehreren) anderen Ebene(n), die sich über oder unter der Zugebene befindet (befinden). Von dieser (diesen) Ebene(n) sind die restlichen Funktionsbereiche der Anlage erschlossen. Eine genauere Sortierung der Container 20 in den einzelnen Funktionsbereichen kann durch sekundäre Einrichtungen zum Vertikalverschub bzw. horizontalen Querverschub der Wagen 1a des Fördermediums 1 geschehen, z.B. durch Querförderwagen 1c.

Es ist sinnvoll, an diese Schaltstelle 1c ein Zwischenlager 10 für die Container 20 anzugliedern, da dadurch die zeitlichen Abhängigkeiten der einzelnen Verkehrsträger (LKW 33, Zug 22, Schiff) unterbrochen werden können.

Eine besonders hohe Leistungsfähigkeit der Anlage wird erreicht, wenn das Zwischenlager 10 als Hochregal mit wahlfreiem Zugriff ausgebildet ist. Dabei können die Regalförderzeuge des Hochregals die Funktion der Schaltstelle 1c des Fördermediums 1 übernehmen. In diesem Fall befindet sich das Hochregal vorzugsweise über oder unter dem Zugumschlagbereich.

Grundsätzlich sind zwei Ausbildungen der Regalförderzeuge möglich:

- Die vertikalen und horizontalen Bewegungen im Regal werden von getrennten Einrichtungen übernommen (Digitalförderzeuge 1cx und 1cz (siehe Fig. 18). Die vertikalen Bewegungen können mit Liften 1cz und die horizontalen Bewegungen mit Querförderwagen 1cx realisiert werden.
- Das Regalförderzeug übernimmt im Regal sowohl die Vertikalbewegungen als auch die Horizontalbewegungen (Analogförderzeug 1cy) (siehe Fig. 19).

In beiden Fällen kann der Wagen des Fördermediums 1a in das Regalförderzeug 1cx, 1cy, 1cz einfahren, wird von diesem an eine Position im Regal gebracht, wo er die Ein- bzw. Auslagerung der Container 20 übernimmt.

Eine besonders schnelle Übergabe zwischen Lift 1cz und Querförderwagen 1cx ist möglich, wenn Einlagerungen von Containern in eine der Regalgassen erfolgen, in denen auch eine Auslagerung erfolgt und wenn die Querförderwagen 1cx zwei Förderwagen 1a des Fördermediums 1 gleichzeitig aufnehmen können. Der Querförderwagen 1cx ist dabei immer mit mindestens einem Förderwagen 1a des Fördermediums 1 besetzt. Nachdem der Lift 1cz einen Förderwagen 1a mit Container 20 in eine Regalgasse gebracht hat, fährt der Förderwagen 1a mit Container 20 auf die leere Position des wartenden Querförderwagens 1cx auf. Danach bringt sich der Querförderwagen 1cx in die Lage, in der der Förderwagen 1a mit einem auszulagernden Container 20 in den Lift 1cz einfahren kann. Der auszulagernde Container 20 wird schon vorher vom Querförderwagen 1cx aus der Regalposition abgeholt.

Eine weitere Möglichkeit besteht darin, daß das Regalförderzeug 1cx, 1cy, 1cz nur den Container 20 transportiert, und durch eine eigene Zunge die Ein bzw. Auslagerung der Container 20 im Regal 10 vornimmt. Die Container 20 werden im Hochregal 10 auf gleiche Art und Weise abgestellt bzw. aufgenommen wie am Abstellsockel 1b der Fördermediums 1b.

Es ist vorgesehen, daß die Container 20 von Umlademaschinen 2a zwischen Zug 22 und Fördermedium 1 bewegt werden, wobei die Be- und Entladung unter der Oberleitung 19 hindurch erfolgt.

Die Umsetzung der Container 20 erfolgt mit Umlademaschinen 2a, die mit Spreadern 18 ausgestattet sein können. Die Umlademaschinen 2a bewegen sich parallel entlang des Gleises 2b direkt über den vorpositionierten oder abgeladenen Containern 20. Die Umlademaschinen 2a können dabei entweder auf Schienen am Beden oder hängend auf darüberliegenden Schienen fahren. Die Umlademaschinen 2a verfügen über einen in waagrechter Richtung teleskopartig ausfahrenden Ausleger 17 mit Spreader 18. Durch die auf diese Weise mögliche Be-bzw. Entladung von der Seite her kann das Ladegleis 2b mit einer Oberleitung 19 ausgestattet sein.

Das Fördermedium 1 übernimmt die Längsverteilung bzw. Vorpositionierung der Container 20 entlang des Ladegleises 2b, wobei sich das Fördermedium 1 an beiden Seiten des Ladegleises 2b befindet, jedoch nur an einer Seite vorpositioniert wird. Dabei kann die Vorpositionierung besonders schnell erfolgen, wenn jeweils einem Abschnitt des Fördermediums 1, auf dem vorpositioniert ist, auf der anderen Seite ein leerer Abschnitt gegenüberliegt. Die Seite, auf welcher vorpositioniert wird, wechselt bei jeder Schaltstelle 1c auf die gegenüberliegende Seite.

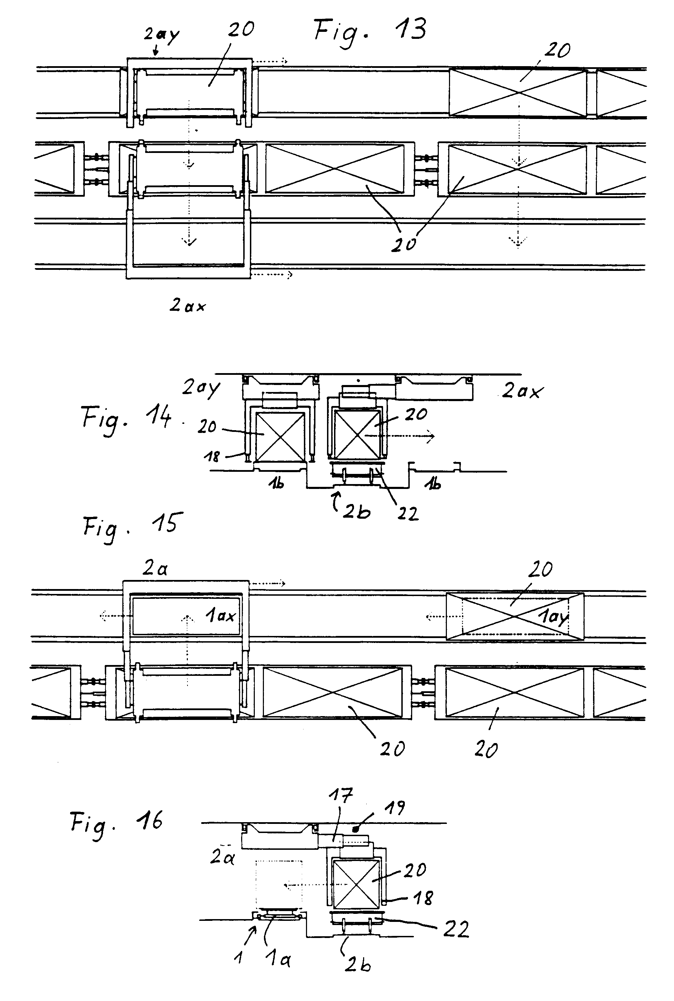

Die Umlademaschinen 2a lassen sich beliebig addieren, ohne sich gegenseitig zu behindern. Je größer die Anzahl der bei der Umladung eingesetzten Maschinen 2a sind, desto schneller kann der Zug 22 abgefertigt werden und den Terminal wieder verlassen. Der Vorgang bei dieser Umladetechnik ist (siehe Fig. 13 und 14):

- Die vorpositionierten Container 20 stehen auf dem Abstellsockel 1b des Fördermediums 1b auf den vorgesehenen Positionen;
- Der Zug 22 fährt an der elektrischen Oberleitung 19 ein und kommt am vorgeschriebenen Haltepunkt zum Stehen.
- Umlademaschinen 2a beginnen paarweise den Zug 22 zu entladen und wieder zu beladen. Dabei beginnt die Entlademaschine 2ax und setzt einen Container 20 vom Zug 22 auf den Abstellsockel des Fördermediums 1, auf welchem sich keine vorpositionierten Container 20 befinden.
- Die Belademaschine 2ay füllt die so entstandene Lücke am Zug 22 mit einem Container 20 auf, den sie von dem Abstellsockel des Fördermediums 1b nimmt, auf dem die vorpositionierten Container 20 stehen.

Dieser Vorgang wiederholt sich, bis alle gewünschten Stellen am Zug 22 ent-, bzw. beladen sind.

- Kommt der Zug 22 mit Leerstellen in den Terminal, so können diese mit den Belademaschinen 2ay aufgefüllt werden. Nimmt eine Entlademaschine 2ax Container 20 vom Zug 22, ohne daß eine Belademaschine 2ay diese wieder auffüllt, verläßt der Zug 22 den Terminal mit einer Leerstelle.

Eine zweite Möglichkeit des Umschlags zwischen Zug 22 und Fördermedium 1 besteht darin, daß sich nur an einer Seite des Ladegleises 2b ein Fördermedium 1 mit Abstellsockel 1b befindet. Die Umschlagtechnik ist in diesem Fall eine Kombination von Tätigkeiten von einer einzelnen Umlademaschine 2a und zwei Wagen 1ax, 1ay des Fördermediums 1.

Der Vorgang bei dieser Umladetechnik ist (siehe Fig. 15 und 16):

- Die vorpositionierten Container 20 stehen auf dem Abstellsockel 1b des Fördermediums 1b auf den vorgesehenen Positionen, wobei diese Positionen jeweils um die Länge des längsten Containers 20 versetzt zu den Verladepositionen am Zug 22 liegen.
- Der Zug 22 fährt an der elektrischen Oberleitung 19 ein und kommt am vorgeschriebenen Haltepunkt zum Stehen.
- Eine Umlademaschine 2a beginnt mit der Entladung eines Containers 20 vom Zug 22 und stellt diesen auf einen bereitstehenden unbeladenen Wagen des Fördermediums 1ax.
- Die Umlademaschine 2a öffnet die Greifarme bzw. hebt die Dorne des Spreaders 18 an.
- Der beladene Wagen des Fördermediums 1ax fährt unter der Umlademaschine 2a, entgegen derer Arbeitsrichtung hinaus.
- Ein zweiter Wagen des Fördermediums 1ay hebt den am Abstellsockel 1b des Fördermediums 1 vorpositionierten Container 20 an und fährt damit in dieselbe Richtung wie der erste Wagen 1ax zwischen die geöffneten Greifarme und unter die angehobenen Dorne des Spreaders 18, und bleibt direkt unter der Umlademaschine 2a stehen.
- Die Umlademaschine 2a greift den Container 20, hebt diesen leicht an und versetzt diesen seitlich, horizontal auf die Lücke des Zugs 22.
- Die Umlademaschine 2a öffnet die Greifarme des Spreaders 18 bzw. hebt die Dorne des Spreaders an und fährt zu dem nächsten abzuladenden Container 20.
- Die bereits beschriebenen Vorgänge wiederholen sich, bis der Zug 22 vollständig ent- bzw. beladen ist. Daraufhin verläßt der Zug 22 den Terminal.

Ein Vorteil dieser Umladetechnik ist, daß Ungenauigkeiten in der Positionierung, sei es durch ungenaues Stehenbleiben des Zuges 22 oder durch ungenaues Vorpositionieren des Containers 20 durch die Bewegungen der Wagen 1a ausgeglichen werden können.

Weiters ist es günstig, wenn die Ein- bzw. Ausfahrt des Zuges 22 in die Anlage bei doppelgleisig ausgebauten Eisenbahnstrecken Kreuzungsfrei geschieht (siehe Fig. 2).

Die Möglichkeit dazu ist gegeben, wenn die Ladegleise 2b zwischen den Streckengleisen 2c angeordnet sind. Erfindungsgemäß ist dies möglich, weil der Bereich des Zugumschlags von den anderen Funktionsbereichen der Anlage getrennt ist und der Zugumschlagsbereich von der Schaltstelle des Fördermediums 1c entweder von oben oder von unten bedient wird.

Ein weiterer Vorteil dieser Anordnung ist, daß in einer Anlage auch mehrere Ladegleise 2b nebeneinander liegen können, und dadurch die Kapazität der Anlage beliebig gesteigert werden kann.

Ferner kann vorgesehen sein, daß die Container 20 von den Umlademaschinen 3a zwischen LKW 33 und Fördermedium 1 bewegt werden, wobei das Fördermedium 1 über, neben oder unter der LKW-Ebene sein kann.

Der Vorteil einer Anordnung des Fördermediums 1 über oder unter der LKW-Ebene ist, daß der LKW 33 durch das Fördermedium 1 nicht in seiner Bewegungsfreiheit gehindert ist.

Eine hohe Leistungsfähigkeit der Umladestation 3 wird erreicht, wenn sich das Fördermedium 1 auf der selben Ebene wie der LKW 33 befindet. In einer derartigen Umladestation 3 sind folgende Einrichtungen nötig (siehe Fig. 11, 12):

- Das Fördermedium 1 ist Abstellsockel im wesentlichen parallel zu und unmittelbar neben dem Standbereich des LKW 3b in der Umladestation.
- Eine Umlademaschine 3a, die mit einem Spreader 18 ausgestattet ist, und die Bereiche des Fördermediums 1 und den Standbereich des LKW 3b überfahren kann.
- Ein LKW 33, der einen Container 20 in die Anlage bringt und/oder einen Container 20 aus der Anlage abholt.
- Zwei Wagen des Fördermediums 1ax und 1ay, die bereitstehen und im Zusammenspiel mit der Umlademaschine 3a den (die) Container 20 zwischen LKW 33 und Fördermedium 1 umschlagen.

Der Vorgang in der Umladestation ist:
- Ein beladener LKW 33 fährt in die Umladestation 3 zwischen die geöffneten Greifarme bzw. unter die angehobenen Dorne des Spreaders 18 und bleibt direkt unter der Umlademaschine 3a stehten.
- Die Umlademaschine 3a steuert an den Container 20 heran, greift ihn mit den Greifarmen, bzw. Dornen, speichert diese Position, hebt den Container 20 leicht an und verführt ihn seitlich zu dem Fördermedium 1.
- Ein unbeladener erster Wagen 1ax des Fördermediums 1 steht an dieser Position bereit und wird von der Umlademaschine 3a beladen.
- Die Umlademaschine 3a öffnet die Greifarme des Spreaders 18 bzw. hebt die Dorne des Spreaders 18 an.
- Der beladene erste Wagen 1ax des Fördermediums 1 verläßt die Umladestation 3.
- Ein beladener, bereitstehender zweiter Wagen 1ay des Fördermediums 1 fährt zwischen die geöffneten Greifarme bzw. unter die angehobenen Dorne des Spreaders 18 und bleibt direkt und der Umlademaschine 3a stehen.
- Die Umlademaschine 3a greift den Container 20, hebt ihn leicht an und verführt ihn seitlich zu dem LKW 33. Dabei bleibt der zweite Wagen 1ay des Fördermediums 1 unbeladen stehen. Für den schnellen Ablauf des Ladevorgangs ist es nun von großem Nutzen, daß die Umlademaschine 3a die genaue Position des LKWs 33 gespeichert hat. Ein komplizierter Suchvorgang zum Einrichten des Containers 20 auf dem LKW 33 kann somit entfallen.
- Die Umlademaschine 3a setzt den Container 20 ab, öffnet die Greifarme bzw. hebt die Dorne des Spreaders an.
- Der LKW 33 verläßt die Umladestation 3 und der nächste LKW kann einfahren..
- Erfindungsgemäß ist vorgesehen, daß die Container 20 von Wagen 1a des Fördermediums 1 an den Umladebereich für das Schiff 4 herangeführt werden.

Der Schiffumschlag geschieht mit Hafenkränen herkömmlicher Bauart.

## Patentansprüche

1. Verfahren zum Umschlagen von Containern (20) oder Wechselaufbauten von LKWs oder Schiffen auf Eisenbahnzüge, bestehend aus folgenden Schritten:
   - Übernahme der Container (20) oder Wechselaufbauten aus einem Zwischenlager (10), einem LKW (33), einem Zug oder einem Schiff;
   - Übergabe der umzuladenden Container (20) oder Wechselaufbauten auf ein Fördermedium (1);
   - Bereitstellung zumindest eines Teiles der Container (20) oder Wechselaufbauten auf dem Fördermedium (1), wobei die Container (20) oder Wechselaufbauten vor der Einfahrt des Zuges vorpositioniert werden und unmittelbar neben die jeweils zur Beladung vorgesehenen Eisenbahnwaggons herangeführt werden.
   - Beladung des Zuges (22) mit den Containern (20) oder Wechselaufbauten;

   dadurch gekennzeichnet, daß die Container (20) oder Wechselaufbauten während ihres Transportes am Fördermedium (1) in einem Teilbereich ihres Bodens flächig unterstützt werden, wogegen sie im zur Vorpositionierung auf zum Fördermedium (1) gehörenden ortsfesten Abstelleinrichtungen (1b) abgestellten Zustand in einem anderen Teilbereich unterstützt

**2.** Verfahren nach Anspruch 1, dadurch gekennzeichnet, daß das Vorpositionieren durch Aufstellen der Container (20) oder Wechselaulbauten unmittelbar neben dem Verladegleis (2b) und parallel zum Verladegleis (2b) erfolgt.

**3.** Verfahren nach Anspruch 2, dadurch gekennzeichnet, daß das Umladen der Container (20) oder Wechselaufbauten durch ein Zusammenwirken einer Manipulationseinrichtung (7) und Wagen (1ax, 1ay) des Fördermediums (1) in einer Weise erfolgt, daß zunächst ein erster Container (20) oder Wechselaufbau mit der Manipulationseinrichtung (7) vom Zug (22) abgeladen und auf einen freien Wagen (1ax) des Fördermediums (1) gestellt wird, der diesen entgegen der Arbeitsrichtung der Manipulationseinrichtung (7) abtransportiert, sodann ein zweiter Wagen (1ay) des Fördermediums einen zweiten, um mindestens eine Containerlänge versetzt positionierten, zu verladenden Container (20) oder Wechselaufbau bereits angehoben hat und unter die Manipulationseinrichtung (7) transportiert, worauf die Manipulationseinrichtung (7) den Container (20) oder Wechselaufbau greift und auf die vorher freigewordene Stelle am Zug (22) abstellt, um dann die Dorne bzw. Spreaderzangen abzuziehen und in Längsrichtung zum nächsten abzuladenden Container (20) oder Wechselaufbau am Zug (22) zu fahren.

**4.** Vorrichtung zum Umschlagen von Containern (20) oder Wechselaufbauten, bestehend aus:
- mindestens einem Verladegleis (2b) für einen Eisenbahnzug (22);
- mindestens einem Fördermedium (1), das zumindest teilweise parallel zu diesem Verladegleis (2b) angeordnet ist;
- Einrichtungen (7) zur Manipulation der Container (20) oder Wechselaufbauten zwischen Fördermedium (1) und dem Eisenbahnzug (22) bzw. den LKWs,

dadurch gekennzeichnet, daß das Fördermedium (1) Mittel zur flächigen Unterstützung der Container (20) oder Wechselaufflauten aufweist, die die Container (20) oder Wechselaufbauten während ihres Transportes im Mittelbereich (16) ihres Bodens unterstützen und die die unteren Längskanten (15) der Container (20) oder Wechselaufbauten zum Abstellen auf ortsfesten Abstelleinrichtungen (1b) freilassen.

**5.** Vorrichtung nach Anspruch 4, dadurch gekennzeichnet, daß die Einrichtungen (7) zur Manipulation der Container (20) oder Wechselaufbauten zwischen Fördermedium (1) und dem Eisenbahnzug so ausgebildet sind, daß die Be- und Entladung unter der Oberleitung (19) des Verladegleises (2b) erfolgen kann.

**6.** Vorrichtung nach einem der Ansprüche 4 oder 5, dadurch gekennzeichnet, daß weiters ein Zwischenlager (10) mit wahlfreiem Zugriff vorgesehen ist.

**7.** Vorrichtung nach Anspruch 6, dadurch gekennzeichnet, daß das Zwischenlager (10) als Regalsystem ausgebildet ist, wobei das Fördermedium die einzelnen Regalpositionen direkt bedient.

**8.** Vorrichtung nach einem der Ansprüche 4 bis 7, dadurch gekennzeichnet, daß das Fördermedium (1) so ausgebildet ist, daß alle Transportvorgänge innerhalb der Vorrichtung damit durchführbar sind.

**9.** Vorrichtung nach einem der Ansprüche 4 bis 8, dadurch gekennzeichnet, daß das Fördermedium (1) als System von Schienen mit darauf beweglich angeordneten Transportwägelchen (1a) ausgebildet ist.

**10.** Vorrichtung nach Anspruch 9, dadurch gekennzeichnet, daß in dem unmittelbar neben dem Verladegleis (2b) angeordneten Abschnitt des Fördermediums und im Zwischenlager zu beiden Seiten der Schienen der Transportwägelchen (1a) Abstellsockel (1b) für die Container (20) oder Wechselaufbauten vorgesehen sind und die Stellflächen der Transportwägelchen (1a) zur Unterstutzung der Container (20) oder Wechselaufbauten unter die durch die Oberseiten der Abstellsockel (1b) bestimmte Ebene absenkbar sind.

**11.** Vorrichtung nach einem der Ansprüche 9 oder 10, dadurch gekennzeichnet, daß die äußeren Schienen der Fördermediums (1) in den Kurven eine Lauffläche für die Spurkränze (S) der äußeren Räder (30) der Transportwägelchen (1a) aufweisen.

**12.** Vorrichtung nach einem der Ansprüche 4 bis 6, dadurch gekennzeichnet, daß das Fördermedium (1) als Förderband oder Rollenband ausgebildet ist.

**13.** Vorrichtung nach einem der Ansprüche 4 bis 12, dadurch gekennzeichnet, daß das Verladegleis (2b) kreuzungsfrei zwischen zwei Streckengleisen (2c) der Eisenbahn angeordnet ist.

14. Vorrichtung nach einem der Ansprüche 4 bis 13, dadurch gekennzeichnet, daß eine LKW-Verladestelle (3) vorgesehen ist, die neben dem Fördermedium (1) angeordnet ist und die eine Hebevorrichtung umfaßt, die sowohl vom LKW als auch von den am Fördermedium (1) transportierten Containern (20) oder Wechselaufbauten in Längsrichtung durchfahren werden kann und daß weiters eine Steuereinrichtung mit einem Speicher vorgesehen ist, in der dem die genaue Position des von einem LKW abgeladenen Containers (20) gespeichert werden kann, um einen auf dem selben LKW aufzuladenden Container mit Hilfe der Steuereinrichtung an exakt die gleiche Position zu bringen.

15. Vorrichtung nach einem der Ansprüche 4 bis 14, dadurch gekennzeichnet, daß das Fördermedium (1) über das Lichtraumprofil des Zuges geführt ist.

16. Vorrichtung nach einem der Ansprüche 4 bis 15, dadurch gekennzeichnet, daß das Fördermedium (1) unter den Gleisen des Zuges geführt ist.

**Claims**

1. A method for transshipping containers (20) or interchangeable bodies from trucks or ships to railway trains, consisting of the following steps:
   - Taking over the containers (20) or interchangeable bodies from an intermediate storage (10), a truck (33), a train or a ship;
   - transferring the containers (20) or interchangeable bodies to be transshipped to a conveying medium (1);
   - making available at least a part of the containers (20) or interchangeable bodies on the conveying medium (1), with the containers (20) or interchangeable bodies being pre-positioned prior to the arrival of the train and being transported directly adjacent to the train waggons intended for loading.
   - Loading of the train (22) with the containers (20) or interchangeable bodies;
   **characterized** in that the containers (20) or interchangeable bodies are supported areally over a partial area of its floor during the conveyance on the conveying medium (1), whereas they are supported in another partial area in the condition when deposited for pre-positioning on stationary depositing devices (1b) belonging to the conveying medium (1).

2. A method as claimed in claim 1, **characterized** in that the pre-positioning is made by placing the containers (20) or interchangeable bodies directly adjacent to the sidetrack (2b) and parallel to the sidetrack (2b).

3. A method as claimed in claim 2, **characterized** in that the transshipment of the containers (20) or interchangeable bodies is made by a cooperation of a manipulating device (7) and a waggon (1ax, 1ay) of the conveying medium (1) in such a way that at first a first container (20) or interchangeable body is unloaded from the train (22) with the manipulating device (7) and is placed on a free waggon (1ax) of the conveying medium (1), which will then carry it off in the opposite direction of the working direction of the manipulating device (7), whereafter a second waggon (1ay) of the conveying medium has already lifted a second container (20) or interchangeable body to be lifted, which has been positionally displaced by one container length, und transports it below the manipulating device (7), whereupon the manipulating device (7) grasps the container (20) or the interchangeable body and places it on the previously vacated position on the train (22) to withdraw, thereafter, the pins or spreader nippers and to move in the longitudinal direction along the train to the next container (20) or interchangeable body to be unloaded.

4. An apparatus for transshipping containers (20) or interchangeable bodies, comprising:
   - at least one sidetrack (2b) for a railway train (22);
   - at least one conveying medium (1) which is arranged at least partially parallel to said sidetrack (2b);
   - devices (7) for manipulating the containers (20) or interchangeable bodies between the conveying medium (1) and the railway train (22) or the trucks;
   **characterized** in that the conveying medium (1) is provided with means for areal support of the containers (20) or interchangeable bodies which support the containers (20) or interchangeable bodies during their transport in the central zone (16) of their floors and which leave open the lower longitudinal edges (15) of the containers (20) or interchangeable bodies for depositing on stationary depositing devices (1b).

5. An apparatus as claimed in claim 4, **characterized** in that the devices (7) for manipulating the containers (20) or interchangeable bodies are arranged between the conveying medium (1) and the railway train such-like that the loading and unloading can be made below the overhead line (19) of the sidetrack (2b).

6. An apparatus as claimed in one of the claims 4 or 5, **characterized** in that furthermore an intermediate storage (10) with random access is provided.

7. An apparatus as claimed in claim 6, **characterized** in that the intermediate storage (10) is arranged as a shelf system, with the conveying medium operating the individual shelf positions directly.

8. An apparatus as claimed in one of the claims 4 to 7, **characterized** in that the conveying medium (1) is arranged such-like that all conveying processes within the apparatus can be carried out by means of it.

9. An apparatus as claimed in one of the claims 4 to 8, **characterized** in that the conveying medium (1) is arranged as a system of rails with transport waggons (1a) movable thereon.

10. An apparatus as claimed in claim 9, **characterized** in that storage bases (1b) for the containers (20) or interchangeable bodies are provided in the section of the conveying medium arranged directly adjacent to the sidetrack (2b) and that the charging areas of the transport waggons (1a) are lowerable below the plane defined by the upper sides of the storage bases (1b) for supporting the containers (20) or interchangeable bodies.

11. An apparatus as claimed in one of the claims 9 or 10, **characterized** in that the outer rails of the conveying medium (1) are provided in the curves with a running tread for the wheel flanges (S) of the outer wheels (30) of the transport waggons (1a).

12. An apparatus as claimed in one of the claims 4 to 6, **characterized** in that the conveying medium (1) is arranged as a conveyor belt or roller conveyor belt.

13. An apparatus as claimed in one of the claims 4 to 12, **characterized** in that the sidetrack (2b) is arranged free from crossings between two through tracks (2c) of the train.

14. An apparatus as claimed in one of the claims 4 to 13, **characterized** in that a truck loading position (3) is provided which is arranged adjacent to the conveying medium (1) and comprises a lifting apparatus which can be driven through in the longitudinal direction both by the truck as well as by the containers (20) or interchangeable bodies conveyed on the conveying medium (1) and that moreover a control device with a memory is provided in which the precise position of a container (20) unloaded from a truck can be stored in order to bring a container to be loaded onto said same truck into exactly the same position with the help of the control device.

15. An apparatus as claimed in one of the claims 4 to 14, **characterized** in that the conveying medium (1) is guided over the structure gauge of the train.

16. An apparatus as claimed in one of the claims 4 to 15, **characterized** in that the conveying medium (1) is guided below the rails of the train.

**Revendications**

1. Procédé de transbordement de conteneurs (20) ou d'éléments interchangeables sur des trains de chemin de fer, à partir de camions ou de bateaux, comprenant les étapes suivantes :
   - on transfère les conteneurs (20) ou les éléments interchangeables à partir d'un magasin intermédiaire (10), d'un camion (33), d'un train ou d'un bateau ;
   - on dépose les conteneurs (20) ou les éléments interchangeables à transborder, sur un moyen d'acheminement (1) ;
   - on dispose au moins une partie des conteneurs (20) ou des éléments interchangeables sur le moyen d'acheminement (1), les conteneurs (20) ou les éléments interchangeables étant prépositionnés avant le départ du train et se trouvant approchés directement à proximité des wagons de chemins de fer prévus pour le chargement ;
   - on charge le train (22) avec les conteneurs (20) ou les éléments interchangeables ;

   caractérisé en ce que, durant leur transport sur le moyen d'acheminement (1), les conteneurs (20) ou les éléments interchangeables sont soutenus par un support plan au niveau d'une zone partielle de leur fond, tandis que, lorsqu'ils sont en situation de prépositionnement sur des installations de dépôt (1b) fixes appartenant au moyen d'acheminement (1), ils sont soutenus au niveau d'une autre zone partielle.

**2.** Procédé selon la revendication 1, caractérisé en ce que le prépositionnement par mise en place des conteneurs (20) ou des éléments interchangeables, a lieu directement à côté de la voie de transbordement (2b) et parallèlement à celle-ci.

**3.** Procédé selon la revendication 2, caractérisé en ce que le transbordement des conteneurs (20) ou des éléments interchangeables s'effectue grâce à une coopération entre un dispositif de manipulation (7) et des voitures (1ax, 1ay) du moyen d'acheminement (1) de telle sorte que, tout d'abord, un premier conteneur (20) ou élément interchangeable est déchargé du train (22) au moyen du dispositif de manipulation (7) et se trouve disposé sur une voiture libre (1ax) du moyen d'acheminement (1), qui emmmène celui-ci dans la direction opposée à la direction de travail du dispositif de manipulation (7), puis une seconde voiture (1ay) du milieu d'acheminement, après avoir déjà soulevé un second conteneur (20) ou élément interchangeable à transborder, déplacé d'au moins une longueur de conteneur, le transporte sous le dispositif de manipulation (7), à la suite de quoi le dispositif de manipulation (7) agrippe le conteneur (20) ou l'élément interchangeable et le dépose sur le train (22) au niveau de l'emplacement désormais laissé libre, pour ensuite retirer les mandrins ou tenailles de l'agrippeur et se déplacer en direction longitudinale vers le conteneur (20) ou l'élément interchangeable suivant à transborder sur le train (22).

**4.** Dispositif de transbordement de conteneurs (20) ou d'éléments interchangeables, se composant de :
- au moins une voie de transbordement (2b) pour un train de chemin de fer (22) ;
- au moins un moyen d'acheminement (1) qui est disposé au moins partiellement parallèlement à cette voie de transbordement (2b) ;
- et de dispositifs de manipulation (7) des conteneurs ou éléments interchangeables, entre le moyen d'acheminement (1) et le train de chemin de fer (22) ou les camions,

caractérisé en ce que le moyen d'acheminement (1) comporte des moyens permettant de soutenir à l'aide d'un support plan les conteneurs (20) ou éléments interchangeables, qui soutiennent les conteneurs (20) ou éléments interchangeables pendant leur transport, au niveau de la zone médiane (16) de leur fond, et qui laissent libre les arêtes longitudinales inférieures (15) des conteneurs (20) ou élément interchangeables, en vue du dépôt de ces derniers sur des installations de dépôt (1b) stationnaires.

**5.** Dispositif selon la revendication (4), caractérisé en ce que les dispositifs de manipulation (7) des conteneurs (20) ou des éléments interchangeables, entre le moyens d'acheminement (1) et le train de chemin de fer, sont réalisés de telle sorte que le chargement et le déchargement se produisent sous la ligne de contact (19) de la voie de transbordement (2b).

**6.** Dispositif selon l'une des revendications 4 ou 5, caractérisé en ce qu'en outre est prévu un magasin intermédiaire (10)) avec accès optionnel.

**7.** Dispositif selon la revendication 6, caractérisé en ce que le magasin intermédiaire (10) est construit comme un système à rayonnages, le milieu d'acheminement desservant directement chaque rayonnage isolé.

**8.** Dispositif selon l'une des revendications 4 à 7, caractérisé en ce que le moyen d'acheminement (1) est réalisé de sorte que tous les processus de transport peuvent être exécutés par son intermédiaire au sein du dispositif.

**9.** Dispositif selon l'une des revendications 4 à 8, caractérisé en ce que le moyen d'acheminement (1) est construit comme un système à rails sur lequel sont disposés des wagonnets de transport (1a) mobiles.

**10.** Dispositif selon la revendication 9, caractérisé en ce que, au niveau de la zone située à proximité immédiate de la voie de transbordement (2b), et dans le magasin intermédiaire, au niveau des deux côtés des rails des wagonnets de transport (1a), sont prévus des socles de dépôt (1b) pour les conteneurs (20) ou éléments interchangeables, et en ce que les surfaces des wagonnets de transport (1a) permettant le soutien des conteneurs (20) ou des éléments interchangeables, peuvent être abaissés au-dessous du plan déterminé par la face supérieure du socle de dépôt (1b).

**11.** Dispositif selon l'une des revendications 9 ou 10, caractérisé en ce que les rails extérieurs du moyen d'acheminement (1), présentent dans les courbes une surface de roulement pour les boudins (S) des roues extérieures (30) des wagonnets de transport (1a).

**12.** Dispositif selon l'une des revendications 4 à 6, caractérisé en ce que le moyen d'acheminement (1) est constitué d'un convoyeur à bandes ou à rouleaux.

**13.** Dispositif selon l'une des revendications 4 à 12, caractérisé en ce que la voie de transbordement (2b) est disposée entre deux voies de circulation (2c) du chemin de fer.

**14.** Dispositif selon l'une des revendications 4 à 13, caractérisé en ce qu'un site de transbordement de camion (3) est prévu, qui est disposé à proximité du moyen d'acheminement (1) et qui inclut un dispositif de levage, qui peut être traversé en direction longitudinale aussi bien par les camions que par les conteneurs (20) ou éléments interchangeables transportés sur le moyen d'acheminement (1) , et en ce qu'en outre est prévu un dispositif de contrôle incluant une mémoire, dans lequel la position exacte d'un conteneur (20) déchargé d'un camion peut être mise en mémoire, afin de déposer, à l'aide de ce dispositif, un conteneur à charger sur le même camion, exactement à la même position.

**15.** Dispositif selon l'une des revendications 4 à 14, caractérisé en ce que le moyen d'acheminement (1) est aménagé sous le gabarit du train.

**16.** Dispositif selon l'une des revendications 4 à 15, caractérisé en ce que le moyen d'acheminement (1) est aménagé sous les rails du train.

Fig. 1

Fig. 2

Fig. 3  Fig. 5  Fig. 7  Fig. 9

Fig. 4  Fig. 6  Fig. 8  Fig. 10

Fig. 11

Fig. 12

Fig. 13

2ay 20 20

2ax

Fig. 14

2ay 2ax

20 20

18

1b 1b

2b 22

Fig. 15

2a 20

1ax 1ay

20 20

Fig. 16

17 19

2a

20

18

22

1 1a 2b

Fig. 17

1c 1c

1

1

2c 1 22 2b 1 2c

Fig. 18

1cz 1cz

20

10

1

1

1cz

1cz

2c 1 22 2b 1 2c

Fig. 19

1cy

20

10

1

2c 1 22 2b 1 2c

18

Fig. 20

Fig. 21

Fig. 22